# EUROPEAN PATENT SPECIFICATION

(11) **EP 0 388 384 B1**
(45) Date of publication and mention of the grant of the patent: **04.05.1994**
(21) Application number: 90850083.8
(22) Date of filing: 28.02.1990
(51) Int. Cl.: F16J 15/34, F04D 29/08

(54) **Mechanical seal**
Mechanische Dichtung
Garniture mécanique

(30) Priority: 16.03.1989 SE 8900936
(43) Date of publication of application: 19.09.1990
(73) Proprietor: ITT Flygt Aktiebolag, S-171 25 Solna (SE)
(72) Inventor: Forssberg, Alf, S-155 00 Nykvarn (SE)
(74) Representative: Larsson, Sten

(56) References cited:
- SE-C- 165 994
- US-A- 1 781 685
- US-A- 2 956 824
- US-A- 3 746 349

## Description

This invention concerns a mechanical seal in a seal arrangement for a submersible rotary machine such as a pump, a mixer or a turbine.

A machine of this type normally comprises an electrically driven motor and a hydraulic unit having a rotary impeller connected to the motor via a driving shaft.

In order to prevent the medium in the hydraulic unit from moving along the driving shaft and enter the driving motor and damage it, there are one or several seal units arranged between the hydraulic unit and the motor. An often used seal is the so-called mechanical seal which consists of one seal ring attached to the rotating shaft and one stationary seal ring attached to the surrounding housing. The two seal rings are pressed towards each other by spring force and prevent effectively fluid from passing between the two rings.

If the medium in the hydraulic unit contains pollutions, which often is the case, such pollutions can enter between the seal surfaces and damage them causing a worse sealing. It is therefore common to have two seal arrangements parted by a room filled with oil. This means that the seal facing the motor always operates with a clean medium thus diminishing the risks for damaged sealing surfaces. If the other seal, heading the hydraulic unit, is damaged, polluted medium may enter the oil room, but by checking the quality of the oil at even intervals, the machine can be taken up for service before the quality of the oil gets so bad that the other seal risks being damaged. An example of such a design is shown in the Swedish patent publication 366 013.

The oil in the oilhousing shall also lubricate the sealing surfaces and abduct the heat that is obtained by the friction. If the machine should operate dry and there is no pumped or mixed medium to abduct the heat, the strain can be considerable.

The purpose of this invention is to increase the cooling of the sealing surface by help of the device stated in the claims.

The invention is described with reference to the enclosed drawings.

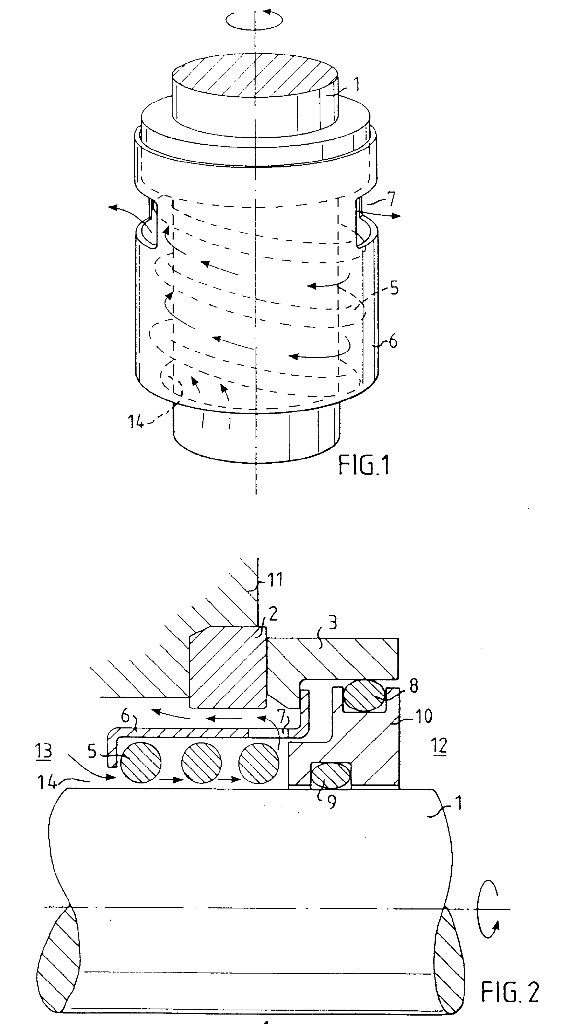

Fig 1 shows a principle sketch of a spring housing with a spring, while Fig 2 shows a section of a spring housing and a mechanical seal on a shaft.

In the drawings 1 stands for a rotary shaft, 2 and 3 a stationary and a rotary seal ring respectively, 4 the sealing surface between the two rings, 5 a spring, 6 a cup formed like a spring housing having openings 7, 8 and 9 O-rings, 10 a socket on the shaft 1, 11 a non-rotory machine part, 12 and 13 spaces for pumped medium and oil respectively and 14 a slot between the shaft 1 and the spring housing 6.

The mechanical seal with its rings are thus meant to prevent medium from going along the shaft 1 from the hydraulic part in the direction of the driving unit - from the space 12 towards the space 13. The sealing is obtained by providing a spring force on the seal ring 3 rotating with the shaft 1 which presses said ring towards the other seal ring 2 which is fixed in non-rotary parts of the machine.

The force is obtained by a spring 5 compressed by a socket 10 and arranged in a spring housing 6 provided with a collar which surrounds an extension on the seal ring 3. A sealing between seal ring 3 and socket 10 and between the latter and the shaft 1 is obtained by O-rings.

The space 13 and the spring housing 6 are filled with oil which lubricates and cools the seal. The friction heat which is developped in the sealing surface 4, can be considerable and may be difficult to abduct at dry running. According to the invention, the spring 5 and the spring housing 6 are so designed that a forced circulation of oil is obtained within the area of the seal surface 4. For that purpose the spring housing 6 is provided with a slot 14 near the shaft at its one end and with openings 7 at its mantle surface in its other end within the area of the sealing surface 4 previously mentioned. This design means that the spring housing 6 will operate as a centrifugal pump which takes in oil from the space 13 through the slot 14 and pumps it out through the openings 7. The transport back to the space 13 takes place outside the housing 6. In this way a forced flow of oil is obtained which gives an effective cooling of the seal surface 4.

In order to further increase the flow, the spring 5 is so wound around the shaft 1 that the pumping is strengthened. This is obtained by arranging the spring coils in such a way that they feed the oil in the same direction towards the seal.

The forced flow that is obtained in the above described way brings about considerably better conditions for the seal rings 2 and 3 meaning less risk for heat stress which might cause damages that jeoperdize the sealing result.

In the despription above the spring housing 6 is utilized for obtaining the forced flow of oil in the direction towards the seal. It is, however, also possible, within the limits of the invention, to design the housing 6 only for pumping purposes, while the spring is arranged somewhere else.

## Claims

1. A mechanical seal comprising a rotary (3) and a stationary (2) seal ring meant to seal a driving unit from a hydraulic unit united by a rotating driving shaft (1), the two seal rings being pressed towards each other by spring force, characterized in that a cup (6) is arranged around the shaft (1) radially within the circumference of the seal rings (2) and (3) respectively, said cup (6) being provided with openings (7) on its mantle surface near the sealing surface (4) between the two rings (2) and (3) and a slot (14) near the shaft (1) in its other end, the latter end being arranged within an oilroom (13) surrounding the shaft (1), said cup (6) during rotation acting as a pump which transports oil from the space (13) in a direction towards the seal surface (4).

2. A mechanical seal according to claim 1, characterized in that the cup (6) is designed as a housing for a helical spring (5) which obtains the spring force on the seal rings (2) and (3).

3. A mechanical seal according to claim 2, characterized in that the spring (5) is wound around the shaft (1) in such a direction that a helical line is obtained which gives a feeding in the same direction as said pumping.

## Patentansprüche

1. Mechanische Dichtung mit einem umlaufenden (3) und einem stationären (2) Dichtungsring zum Abdichten einer Antriebseinheit von einer Hydraulikeinheit, die durch eine rotierende Antriebswelle (1) verbunden sind, wobei die beiden Dichtungsringe durch Federkraft gegeneinander gedrückt werden,
dadurch gekennzeichnet, daß ein Becher (6) radial innerhalb des Umfangs der Dichtungsringe (2) bzw. (3) um die Welle (1) herum angeordnet ist, wobei der Becher (6) auf seiner Mantelfläche in der Nähe der Dichtungsfläche (4) zwischen den beiden Ringen (2) und (3) mit Öffnungen (7) versehen ist und in seinem anderen Ende nahe der Welle (1) mit einem Schlitz (14) versehen ist, wobei letzteres Ende in einem die Welle (1) umgebenden Ölraum (13) angeordnet ist und wobei der Becher (6) während einer Rotationsbewegung als Pumpe wirkt, die Öl von dem Raum (13) in Richtung auf die Dichtungsfläche (4) transportiert.

2. Mechanische Dichtung nach Anspruch 1,
dadurch gekennzeichnet, daß der Becher (6) als Gehäuse für eine Schraubenfeder (5) ausgelegt ist, die die auf die Dichtungsringe (2) und (3) wirkende Federkraft liefert.

3. Mechanische Dichtung nach Anspruch 2,
dadurch gekennzeichnet, daß die Feder (5) in einer derartigen Richtung um die Welle (1) gewickelt ist, daß sich eine schraubenlinienförmige Linie ergibt, die zu einer Förderrichtung in derselben Richtung wie die Pumprichtung führt.

## Revendications

1. Joint d'étanchéité mécanique comprenant un anneau d'étanchéité rotatif (3) et un anneau d'étanchéité stationnaire (2) destinés à rendre étanche une unité d'entraînement d'une unité hydraulique réunies par un arbre d'entraînement rotatif (1), les deux anneaux d'étanchéité étant pressés l'un contre l'autre par une force élastique, caractérisé en ce qu'une coupelle (6) est agencée autour de l'arbre (1) radialement à l'intérieur du contour des anneaux d'étanchéité (2) et (3) respectivement, la coupelle (6) étant munie d'ouvertures (7) ménagées sur sa paroi formant manchon près de la surface d'étanchéité (4) entre les deux anneaux (2) et (3) et d'une fente (14) près de l'arbre (1) sur son autre extrémité, la dernière extrémité étant agencée à l'intérieur d'une chambre à huile (13) entourant l'arbre (1), la coupelle (6) agissant pendant la rotation comme une pompe qui transporte de l'huile depuis l'espace (13) dans une direction vers la surface d'étanchéité (4).

2. Joint d'étanchéité mécanique selon la revendication 1, caractérisé en ce que la coupelle (6) est destinée à former un logement pour un ressort hélicoïdal (5), lequel délivre la force élastique sur les anneaux d'étanchéité (2) et (3).

3. Joint d'étanchéité mécanique selon la revendication 2, caractérisé en ce que le ressort (5) est enroulé autour de l'arbre (1) dans une direction telle qu'une ligne hélicoïdale est obtenue qui fournit une alimentation dans la même direction que le pompage.
